(19) Europäisches Patentamt
European Patent Office
Office européen des brevets

(11) **EP 2 288 809 B1**

(12) **EUROPEAN PATENT SPECIFICATION**

(45) Date of publication and mention
of the grant of the patent:
**29.07.2015 Bulletin 2015/31**

(51) Int Cl.:
***F03D 11/00*** *(2006.01)*

(21) Application number: **09729586.9**

(22) Date of filing: **14.04.2009**

(86) International application number:
**PCT/GB2009/000968**

(87) International publication number:
**WO 2009/125205 (15.10.2009 Gazette 2009/42)**

(54) **A WIND TURBINE, A BLADE THEREFOR AND A METHOD OF PROCESSING SIGNALS REFLECTED THEREFROM**

WINDTURBINE UND SCHAUFEL DAFÜR SOWIE VERFAHREN ZUR VERARBEITUNG VON REFLEKTIERTEN SIGNALEN

EOLIENNE, PALE POUR CELLE-CI ET PROCEDE DE TRAITEMENT DE SIGNAUX REFLECHIS PAR CELLE-CI

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **11.04.2008 GB 0806666**
**19.08.2008 GB 0815137**

(43) Date of publication of application:
**02.03.2011 Bulletin 2011/09**

(73) Proprietor: **Bond, Philip Charles**
**London W4 1NA (GB)**

(72) Inventor: **Bond, Philip Charles**
**London W4 1NA (GB)**

(74) Representative: **White, Duncan Rohan**
**Marks & Clerk LLP**
**Fletcher House**
**Heatley Road**
**The Oxford Science Park**
**Oxford OX4 4GE (GB)**

(56) References cited:
**EP-A- 0 378 839        EP-A- 1 592 883**
**EP-A- 1 746 284        WO-A-2005/020373**
**WO-A-2008/006377      GB-A- 1 258 943**
**JP-A- 59 160 785       US-A- 3 905 033**
**US-A- 5 400 032**

• **PAUL SAVILLE: "Review of Radar Absorbing Materials" INTERNET CITATION, no. TM 2005-003, 31 January 2005 (2005-01-31), XP002541734 [retrieved on 2005-01-03]**

## Description

The present invention relates to a blade for a wind turbine, one or more pairs of blades for a wind turbine, a wind turbine comprising an even number of blades, and a method of processing a radar signal reflected from a wind turbine having an even number of blades to reduce the amplitude of a clutter signal generated by the wind turbine.

## Background of the Invention

Wind turbines use rotating blades coupled to electrical generators to produce energy from the wind. Large collections of wind turbines are known as windfarms. It is known that both civilian and military radar systems may have substantially reduced accuracy in tracking and detection of targets when windfarms are in direct line-of-sight of a radar installation. This may be highly detrimental to the safe provision of air traffic services as the air traffic controller monitoring the radar display may be unable to differentiate between radar returns from real aircraft and those from the rotating turbine blades.

Radar uses the reflection of pulses of electromagnetic waves to detect targets. Civilian and military aviation radar typically operate in frequency bands having frequencies of 3 GHz, 5 GHz or 9 GHz. Moving targets shift the frequency of the transmitted radar pulses and this shift is known as the doppler effect. In order to differentiate between reflections from aircraft and reflections from static objects, such as power line towers, the doppler shift of the reflected signal pulse transmitted by the radar system is analyzed. It is usually the case that a large number of slowly moving reflectors are present (such as tree branches moving in the wind) and these may result in the display of unwanted returns known as clutter. In order to remove the unwanted radar clutter caused by these objects, a conventional radar uses a "clutter filter" which filters signals so that only those signals with a doppler shift (speed) higher than a predetermined threshold value are analyzed.

In order to cope with local variations in the clutter and changes in wind speed (or other causes of clutter) many conventional radar systems use adaptive clutter maps which operate by measuring the clutter in a given region and the threshold is increased if the clutter speed increases.

The rotor blades of large wind turbines often move at speeds similar to those of aircraft (either slow moving aircraft or aircraft travelling obliquely to the radar). Speeds of 100 mph or more at the blade tips of wind turbines are common and therefore the radar reflection from the blades has a large doppler shift. This effect is maximized when the blades rotate towards/away from the radar transmitter. The turbine blades rotate around an axis which itself rotates around a vertical support column and will often be rotating at different speeds and in different directions due to variations in wind direction. Consequently the blades present many angles to the microwave illumination and a time varying radar Cross Section (RCS). This creates a strong reflected radar signal with the result that a large amount of clutter may be detected by a radar system where there is a windfarm having many rotating blades. Such clutter may have an amplitude larger than many low RCS (Radar cross section) aircraft. It therefore becomes more difficult to detect low RCS aircraft in these conditions and conventional tracking algorithms may fail to create tracks and/or lose existing tracks of these aircraft as the clutter may obscure such targets. Furthermore, due to the broad doppler shift of the reflected energy, it is difficult to use methods based on doppler shift detection, such as Moving Target Detection, to filter the target signal from the windfarm clutter which again could result in the possible failure to detect aircraft overflying windfarms or loss in the tracking of such aircraft.

A typical windturbine blade is shaped approximately as an airfoil blade with a twist. Conventional blades are wide closer to the rotor centre and narrow towards the tip of the blade and the shape of the leading edge of the blade is approximately parabolic. The maximal doppler clutter is created when the transmitted electromagnetic radiation strikes the edge of the blade rather than a face of the blade. The electromagnetic radiation reflected therefrom is scattered both laterally and directly back towards the transmitter. However, a further problem arises due to radiation reflected from the faces of the blades when peak reflectance is towards the transmitter and this reflection is also detected as clutter by the radar.

A number of conventional attempts at reducing the RCS of windturbine blades have centered around the use of methods such as Jaumann screens which reduce the reflected energy (so called "stealth" techniques). These typically increase blade weight by as much as 25% and lead to higher production costs due to increased complexity of the internal blade construction and use of more expensive materials. EP-A-1 746 284 applies radar absorbing material to a wind turbine blade.

The present invention is directed to ameliorating the abovementioned problems.

## Summary of the Invention

There is provided a blade for a wind turbine according to claim 1. Further embodiments are set out in the dependent claims.

In the preferred embodiment, the layer comprises a layer of material applied to the outer surface of the blade and/or a layer of material incorporated within the blade.

The layer may comprise a layer of dielectric material arranged to introduce said plurality of phase changes.

In the preferred embodiment, the layer comprises an array of wells applied to one or more of the first surface or the second surface and/or to an inner surface within the blade.

The array of wells comprises a plurality of wells having differing depths.

In a preferred embodiment, a plurality of the wells have sloping internal and/or external walls, with differing slope angles.

Preferably, the array of wells extends along one or more of the first and second side edges of the blade.

In a preferred embodiment, a plurality of arrays of wells are arranged in one or more bands extending across the blade.

The wells may be filled with a material to provide a substantially smooth surface across the blade. Such a material is preferably substantially transparent to microwaves and may be, for example, Teflon (TM).

In a preferred embodiment, the array of wells comprises a plurality of wells each having an associated depth, the depth of each well being determined according to the formula:

$$d_n = \frac{s_n \lambda}{2(P-1)},$$

where

$d_n$ is the depth of a well,

n is the number of a well where n=1, 2...P-1 with P being an odd prime,

r is a primitive root of P,

$\lambda$ is the wavelength of the incident radiation,

$s_n$ is a primitive root sequence defined *by $s_n = r''$ mod P.*

Preferably, the incident radiation has an asscociated wavelength and the array of wells comprises a plurality of wells each having an associated depth, wherein the maximum depth of a well is substantially half the wavelength of the incident radiation.

When the blade is to be used in areas where radar systems providing the incident radiation operate in the frequency bands 3 GHz or 5GHz, preferably the depth of a well is less than or equal to 5cm.

When the blade is to be used in areas where radar systems providing the incident radiation operate in the 9GHz frequency band, preferably the depth of a well is less than or equal to 1.7 cm.

## Brief Description of the Drawings

The present invention will now be described by way of example and with reference to the accompanying drawings in which:

Figure 1 a is trace of a display of a doppler shift of a vertically polarised reflected signal from a conventional wind turbine as seen by a radar operating in L band;

Figure 1b is trace of a display of a doppler shift of a horizontally polarised reflected signal from a conventional wind turbine as seen by a radar operating in L band;

Figure 2a is a schematic diagram of a wind turbine having two blades according to a preferred embodiment of the present invention;

Figure 2b is a schematic diagram of a wind turbine having four blades according to a preferred embodiment of the present invention;

Figure 2c is a schematic flow diagram of stages in a processing system for processing doppler returns from one or more wind turbines of the types shown in Figures 2a and 2b, according to a preferred embodiment of the present invention;

Figure 3a is a sectional view of a conventional airfoil used as a blade for a conventional wind turbine;

Figure 3b is a sectional view of an airfoil for use as a blade for a wind turbine in accordance with a preferred embodiment of the invention;

Figure 4a is a graph showing the variation in lift coefficient with angle of attack for the airfoil sections of Figures 3a and 3b;

Figure 4b is a graph showing the variation in drag coefficient with angle of attack for the airfoil sections of Figures 3a and 3b;

Figure 5 is a cross-section through a portion of a blade according to a further preferred embodiment of the present invention showing exemplary variations in the blade surface;

Figure 6 is a perspective view from above of a portion of the blade surface of Figure 5 showing exemplary variations in the blade surface;

Figure 7 is a cross-section through a portion of a blade according to a further preferred embodiment in which variations are embedded in the blade;

Figure 8 is front elevation of a blade according to a further preferred embodiment in which the surface variations are arranged in bands across the surface of the blade; and

Figures 9 and 10 show cross-sections through the surfaces of blades according to further preferred embodiments of the present invention.

## Detailed Description of Preferred Embodiments

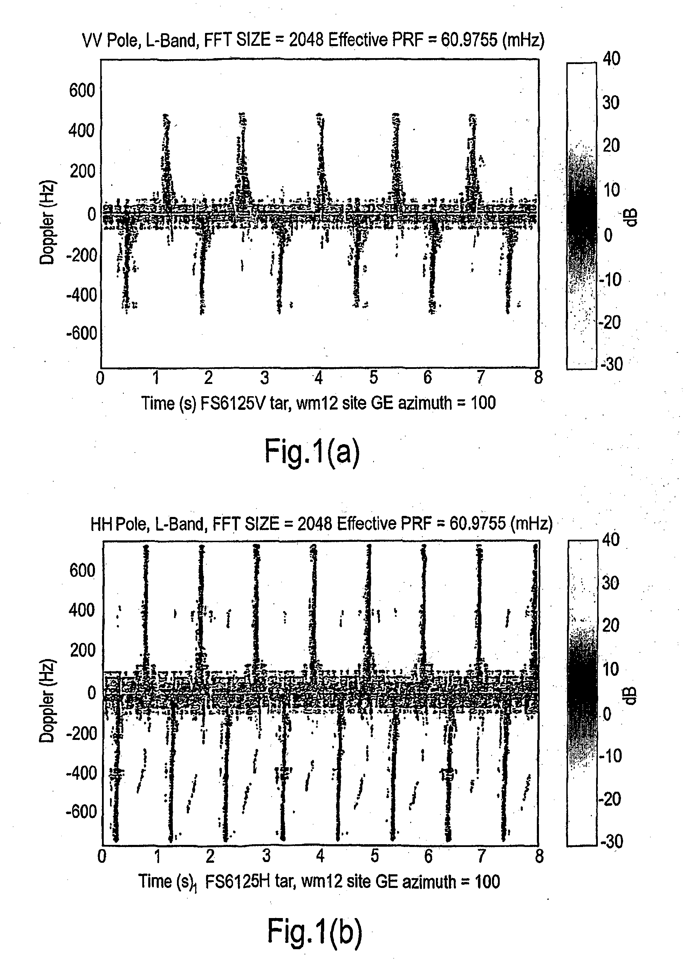

Figures 1 a and 1 b show the doppler clutter generated over time by a single conventional wind turbine. The spikes (which represent positive and negative pulses) shown in these figures are due to the blades of the turbine rotating both toward and away from the radar. There is also shown a complex pattern between the spikes due, for example, to the angle of the blades changing, and/or reflections from the tower supporting the wind turbine, the nacelle, and other objects. A conventional windfarm will generate a sum of many such doppler patterns with differing phases which may be detected by a radar system. It is possible to determine from Figures 1a and 1b that the wind turbine used in the examples of Figures 1 a and 1 b has three blades. This is typical of the vast majority of conventional wind turbines and accounts for the time between positive and negative doppler shifts as one blade moves toward the radar then, a short time later, another blade moves away from it. Whilst it would be possible to use signal processing to remove much of this clutter, a radar return from a windfarm may include several turbines in each range resolution cell and/or clutter cell and the short dwell time of the radar beam as it sweeps over the windfarm will make such processing difficult.

One or more preferred embodiments of the present invention are directed to a wind turbine that allows radar interference from windfarms comprising a plurality of wind turbines to be substantially reduced. A method is also proposed for reducing radar clutter from windfarms equipped with wind turbines according to a preferred embodiment of the present invention.

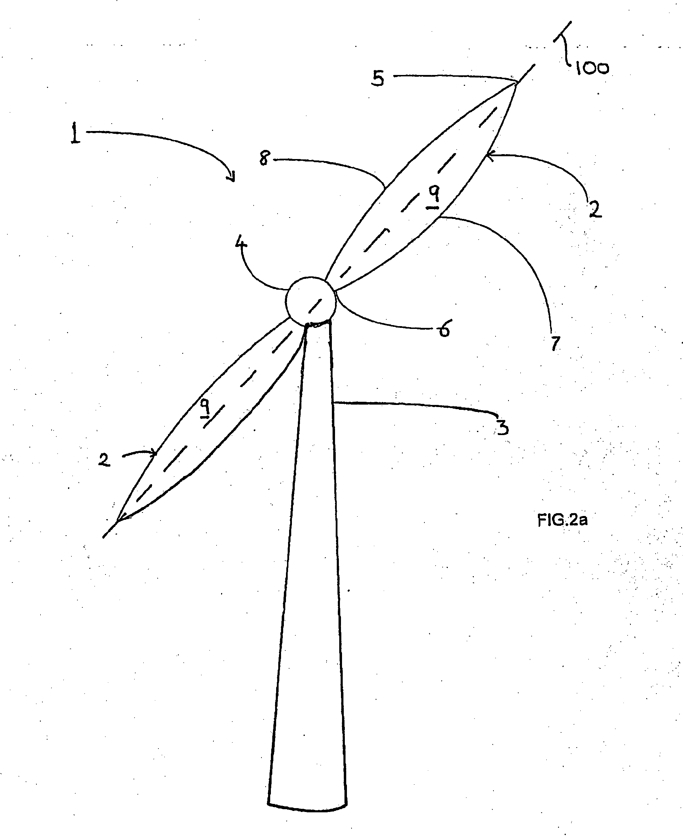

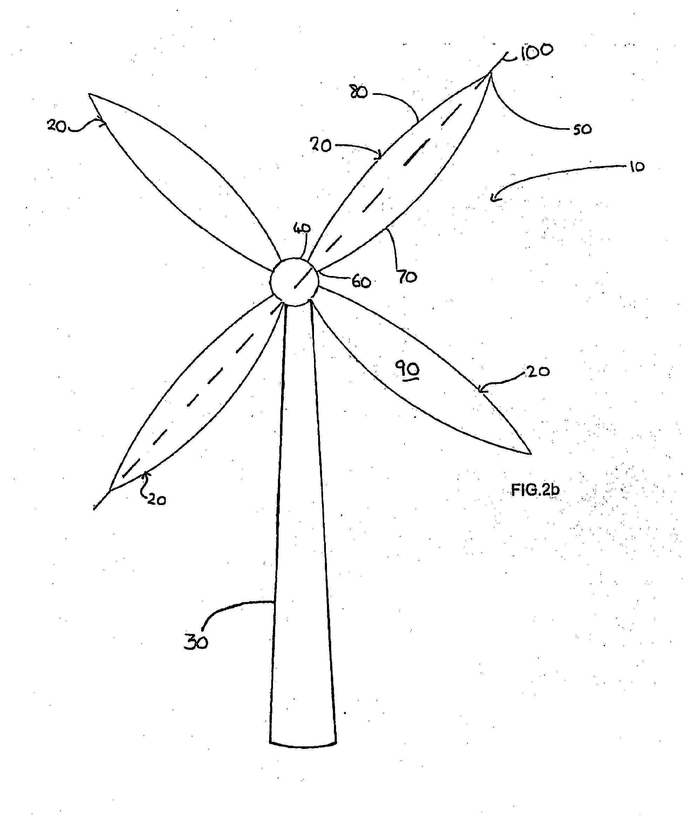

A wind turbine 1, 10 according to a preferred embodiment of the present invention has an even number of blades, for example two blades 2, as shown in Figure 2a, four blades 20, as shown in Figure 2b or more (not shown). As shown in Figures 2a and 2b, each wind turbine comprises a tower 3, 30 and a shaft 4, 40 mounted on the tower about which the blades 2, 20 rotate in use. Each blade 2, 20 has a first free end 5, 50 which forms the tip of the blade 2, 20, a second end 6, 60 which is attachable to the shaft 4, 40, a first side edge 7, 70, a second side edge 8, 80, a first surface 9, 90 and a second surface (not shown). Each blade 2, 20 also has an associated longitudinal axis 100 extending from the first end 5, 50 to the second end 6, 60.

When an even number of blades 2, 20 is used, the radar doppler returns from each windturbine 1, 10 will be substantially symmetric about the zero doppler line as each spike upward will have a nearly mirror image spike downward. Efficient signal processing of doppler returns from one or more wind turbines 1, 10 according to preferred embodiments may be achieved due to the highly symmetric radar doppler signature produced by such wind turbines as, using signal processing techniques, it is possible to cancel a substantial portion of the unwanted doppler signal produced by such wind turbines.

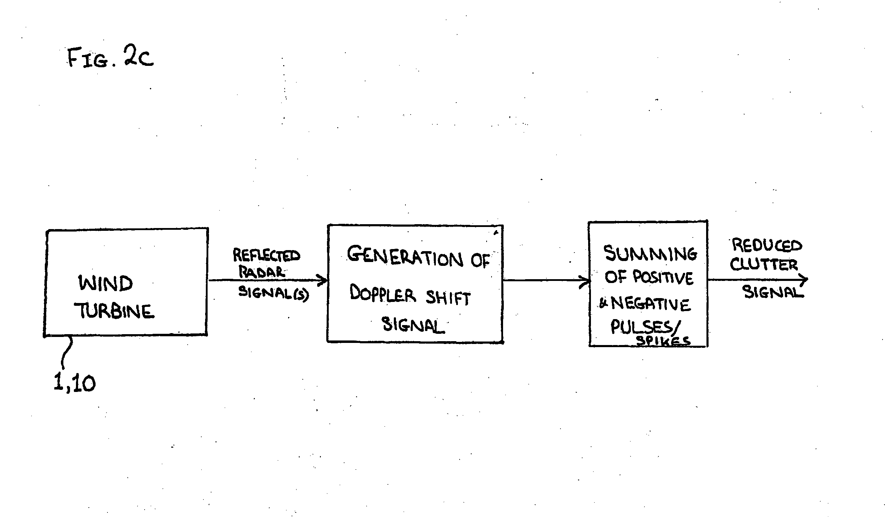

Examples of possible preferred signal processing techniques according to preferred embodiments for removing and/or reducing the displayed clutter are shown in Figure 2c and are as follows:

### Example 1:

The displayed clutter may be reduced by use of a differential processing technique in which the doppler returns from one or more wind turbines 1, 10 according to a preferred embodiment are summed so that the resulting signal removes any component that is present in both positive and negative doppler shifts, each doppler return comprising positive frequency shifts and negative frequency shifts. In the event that many wind turbines according to one or more preferred embodiments are present within a single resolution cell of a radar, the alignment of the doppler signals for each individual turbine allows for a reduction in the overall clutter displayed as any component that is present in both positive and negative doppler shifts for each turbine is removed thereby reducing the overall clutter signal. Signals due to aircraft will be unchanged as an aircraft travels in one direction at a time.

The displayed clutter may be further reduced or removed by imposing a predetermined threshold and removing any residual spike from the resultant signal (after summation of the positive and negative doppler shifts for each turbine) which exceeds the predetermined threshold.

### Example 2:

In an alternative embodiment, whilst the positive and negative doppler spikes generated by the even number of blades in a turbine according to a preferred embodiment will not be exactly the same, in a wind turbine using even numbers of blades, those spikes will occur in the same time window and therefore it is possible to remove those spikes occurring in that time window if both the positive and negative spikes in a particular time window exceed a predetermined threshold. These spikes may therefore be removed and a clutter map may then be generated without the clutter attributable to the wind turbine(s) having those blades.

### Example 3:

Some conventional radar systems use adaptive clutter maps to reduce the effects of clutter in displayed images. Clutter maps are composed of clutter cells which are often much larger than the resolution of a radar. In the presence of wind turbines according to a preferred embodiment which have an even number of blades, it is possible to analyse the doppler returns in a small resolution cell in order to determine whether a highly symmetric doppler signature exists. A clutter map of the wind turbines is developed by analysing the radar doppler returns for symmetry in the returns and spiking behaviour typical of the wind turbine radar return. If there are highly symmetric returns within a range resolution cell then, according to a preferred embodiment, the clutter map may exclude them from the clutter calculation. In this way a clutter map may be developed which takes account of the individual wind turbines and creates a clutter map of radar reflectors with a strongly symmetric doppler shifted return signal.

According to this preferred embodiment, in order to ensure that the signal processing only removes stationary objects with large doppler returns, such as wind turbines, a conventional static clutter map is referenced and symmetric doppler clutter is ignored only if it coincides with a large RCS static reflector. This will typically be the wind turbine tower and generator casing.

As shown in Figures 2a and 2b, preferred embodiments of the present invention have an even number of turbine blades 2, 20. If two blades 2 are used, the velocity of the blades may be increased to more than that of a conventional three-bladed turbine to generate the same power output for a given blade length and wind speed. Twin bladed wind turbines 1 have to be able to withstand periodic shocks as one blade passes in front of the tower 3 and has a reduced force applied by the wind. They have the advantages of being cheaper than wind turbines having more than two blades and the efficiency of twin bladed systems is approximately 97% of that of a three blade system. A four bladed design, as shown in Figure 2b, is more stable than a twin bladed wind turbine 10 and requires lower blade velocities which reduces the maximum doppler shift produced by the blades 20.

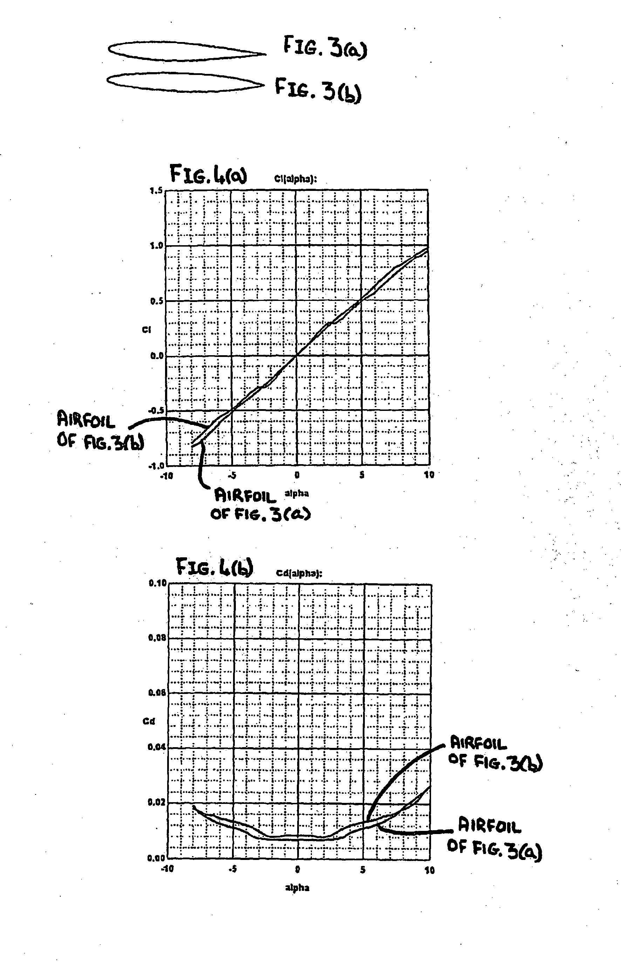

Figure 3a shows a cross-section through a typical airfoil used as a blade in a conventional wind turbine. As shown, standard wind turbine airfoils are designed to produce lift with low drag and consequently use asymmetric airfoil shapes.

Figure 3b shows a cross-section through an airfoil at the tip of a blade 2, 20 which may be used as a blade 2, 20 in a preferred embodiment of the present invention. The doppler shift produced by rotating turbine blades 2, 20 in a wind turbine is greatest near the tip 5, 50 as the blade speed is higher. In order to reduce the doppler signal created by the wind turbine 1, 10, the blades 2, 20 are designed to produce a radar reflection that is highly symmetric from front to back to enable a reduction in the clutter signal produced. This radar reflection symmetry is improved if the blades are symmetrical front-to-back. The airfoil section of Figure 3b is designed to give a highly symmetric doppler return from a wide variety of angles to a radar to assist in improving the efficiency of the signal processing techniques described above. To achieve this, the blade 2, 20 is shaped as a standard airfoil near the end which will be near the rotor center and shaft 4, 40 and is shaped to be increasingly symmetric towards the blade tip 5, 50 which is substantially symmetric in cross-section. In this way, the advantages of conventional airfoil cross-sections may be retained over much of the blade and it is possible to design blade cross-sections that provide similar lift to conventional airfoils. Thus, at the first end 5, 50 of the blade 2, 20, a first portion of the airfoil section extending from the first side edge 7, 70 to the longitudinal axis 100 is substantially symmetrical about the longitudinal axis 100 with a second portion of the airfoil section extending from the second side edge 8, 80 to the longitudinal axis 100.

Figures 4a and 4b show the variation in lift and drag of the two airfoils sections of Figures 3a and 3b at varying angles of attack. As shown in Figures 4a and 4b, the lift is similar for a given angle of attack (alpha degrees) and the drag is equal for angles of attack above 8 degrees.

The airfoils used in wind turbines are always used with an angle of attack that is high in order to generate maximum lift which is used to rotate the blades. It can be seen from Figures 4a and 4b that whilst the drag coefficient of the airfoil of Figure 3a is lower when zero angle of attack is used (a useful characteristic in aircraft when cruising), it is not necessarily better when a large angle of attack is always used as in the case of wind turbines.

In a preferred embodiment, camber may be applied to the blade to alter the lift and the drag which will be experienced by the blade over the operational range of angles of attack (for example to increase the lift and lower the drag), whilst also having a high degree of symmetry to radar reflection.

In a further preferred embodiment, the leading and/or trailing edges of the blades may be covered by a radar absorbing material in order to reduce radar reflection. This covering (or coating) may advantageously be used in the region of the blades where the airfoil sections are narrow and the edges are thin. In order to minimize weight, a radar-absorbing plastic material may preferably be used. Wind turbine clutter may be further reduced by the addition of such materials as they reduce the radar reflection coefficient. This covering is preferably only applied at/to the thinnest part(s) of the blade which is where the radar reflections are greatest. This is more economical than covering the entire blade.

Much of radar scatter comes from the tip of the wind turbine and, in order to reduce this, the tip 5, 50 may be coated with a radar absorbing material. In order to minimize weight, a radar absorbing plastic material may be used as the coating. The thickness of the coating may be increased progressively so that it is thickest at the tip 5, 50 and thinner further from the tip of the blade thereby forming a graduated conductive surface along the blade 2, 20.

Internally, the blades 2, 20 of wind turbines are usually strengthened by means of girders (typically made of glass reinforced plastic material). Conventional girders may contribute to reflection from the wind turbine due both to their shape (which often contains flat sections) and the internal intersection between the girders and the outer blade airfoil which leads to the creation of corner reflectors which reflect microwave radiation that has penetrated the outer surface of the blade. This radiation is reflected back to the transmitting radar.

According to a preferred embodiment of the present invention, the internal blade construction may use smooth joins between the girders and the outer blade skin. Furthermore, the girders may have a curved surface which reduces the strength of specular reflections by altering the directivity of the girder reflection. This will reduce the amplitude of the radiation reflected back to the transmitting radar.

In a further preferred embodiment, a lightning conductor may be routed internally through the blade of the wind turbine and a round cable having a lower radar cross section (RCS) may be used instead of a conventional strip to reduce the amplitude of the radiation reflected back to the transmitting radar. In conventional wind turbines, a lightning strip may, in some cases, typically be attached to the leading edge of the blade which contributes to the doppler spike.

As mentioned above, radar systems process signals by analysing the doppler shift within discrete cells. In addition to the doppler shift generated by the movement of the wind turbine blades, secondary doppler signals may be produced when the microwave beam transmitted by a radar is reflected by other structures such as the supporting tower of the wind turbine or nacelle onto the blades and is then re-reflected to the receiving radar. In addition, there may be a plurality of re-reflections detected by the receiving radar including, for example, a reflection from a blade onto the tower or nacelle which then reflects some of the energy back to the radar. These reflected signals may lead to the production of doppler shift even when the blades of the wind turbine are orthogonal to the radar (when the blades have zero velocity relative to the radar).

Secondary reflections may lead to doppler shift signals which are not symmetric. An example would be a reflection from a downward pointing blade onto the tower and back to the radar. This will lead to a doppler shift, however, because the "opposite" blade which is pointing upward has no tower facing it there is no compensating reflection from the upper blade. To reduce the effect of secondary reflections, a number of possible modifications may be made, for example:

(1) extend the tower supporting the wind turbine upward to extend beyond the shaft of the turbine so that secondary reflections may be more symmetic;

(2) use counter-rotating blades so that secondary reflections between the tower and the lower blades at given points in time may be substantially cancelled out by signal processing due to the symmetic doppler shift caused by secondary reflections from these blades;

(3) reduce the radar cross section (RCS) of the tower and/or the nacelle and/or the blades;

(4) reshape the nacelle to reflect energy away from the blades;

(5) use microwave absorbing materials on part of the tower;

(6) use microwave absorbing materials on parts of the blades;

(7) increase the distance from the blades to the tower.

(8) reshape the tower to reflect energy away from the blades - in situations where there may be concerns over locating one or more wind turbines within the range of a single or small number of known radars, it may be advantageous to reshape the tower such that instead of the tower(s) having a conventional substantially circular cross-section, a sharp edge is presented along the length of the tower facing in the direction of the radar. This edge may be coated with a radar absorbing material to reduce scatter of the reflected microwaves transmitted by the radar.

In a preferred embodiment, this reshaping could be built into the production of the tower and a tower be produced which has a substantially rhombic cross-section or other quadritaleral shape such as kite-shaped. In such a case, it may be advantageous to round the remaining three edges which are not directed towards the radar to reduce scatter. Also, a magnetc radar absorbing material (MAG RAM) may be applied along those rounded edges, again to reduce scatter.

In an alternative embodiment, the reshaping of the tower to provide a sharp edge facing a known radar or radars could be achieved by attaching a shaped portion having a sharp edge along the length of the tower, as a retrofit to an existing tower or towers. Again, a magnetic radar absorbing material may be applied along the joins of the shaped portion and the tower to reduce scatter.

If a plurality of wind turbine towers in any given location are to be reshaped, it will be necessary to position or ensure the towers are positioned such that the reflections from the towers do not iminge on other towers in the windfarm.

One or more preferred embodiments of the present invention are therefore particularly advantageous as they provide means of producing a symmetric radar doppler reflection to which signal processing may be applied to remove much of the radar clutter associated with windfarms. The symmetry is independent of frequency for most radar of interest so that the clutter reduction is largely frequency independent unlike possible solutions based on conventional "stealth" technology. The clutter from multiple wind turbines may be reduced in the same way as the clutter from a single turbine.

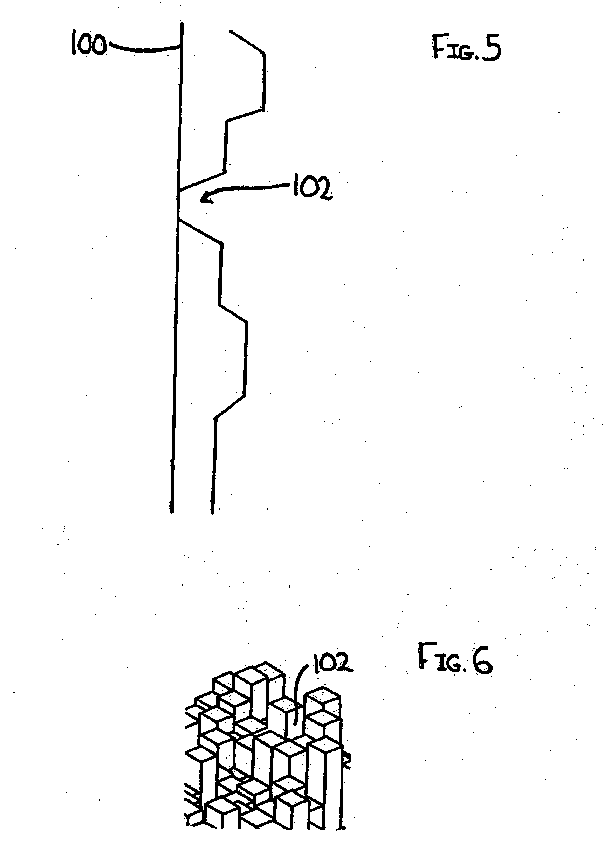

Figures 5 to 10 are directed to a further aspect of the present invention concerned with addressing the problems arising when radiation strikes, for example, a face of the blades with peak reflectance towards the transmitter which is detected as clutter by the radar. This effect is still present when the radiation strikes an edge of the blade rather than a face of a blade and therefore the methods and features described may also be applied to the edges of the blades. Furthermore, the methods and features described in connection with Figures 5 to 10 may also be applied in conjunction with or used independently from the blades illustrated and described with reference to Figures 1 to 4b.

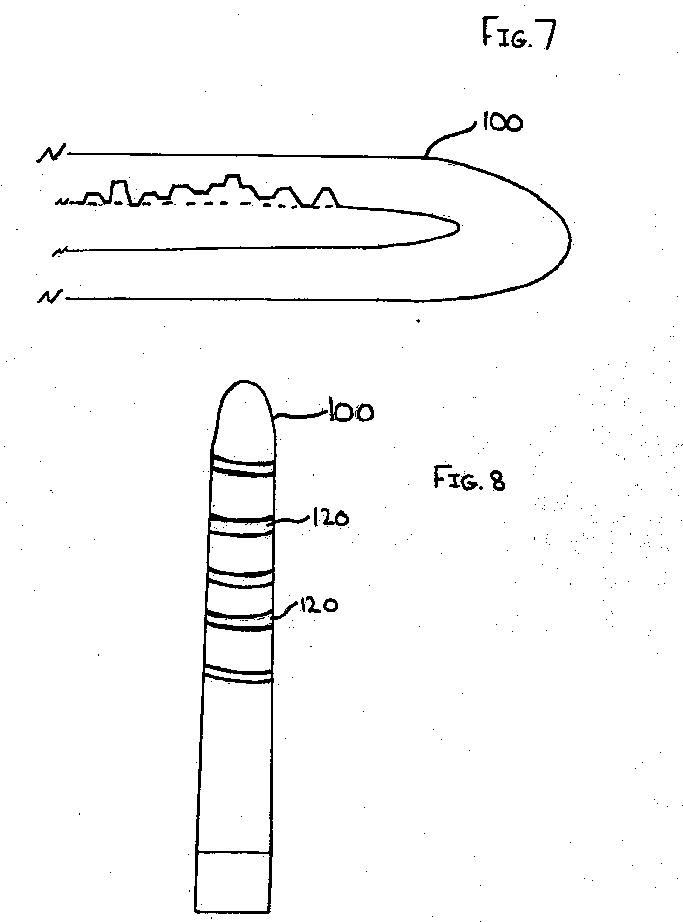

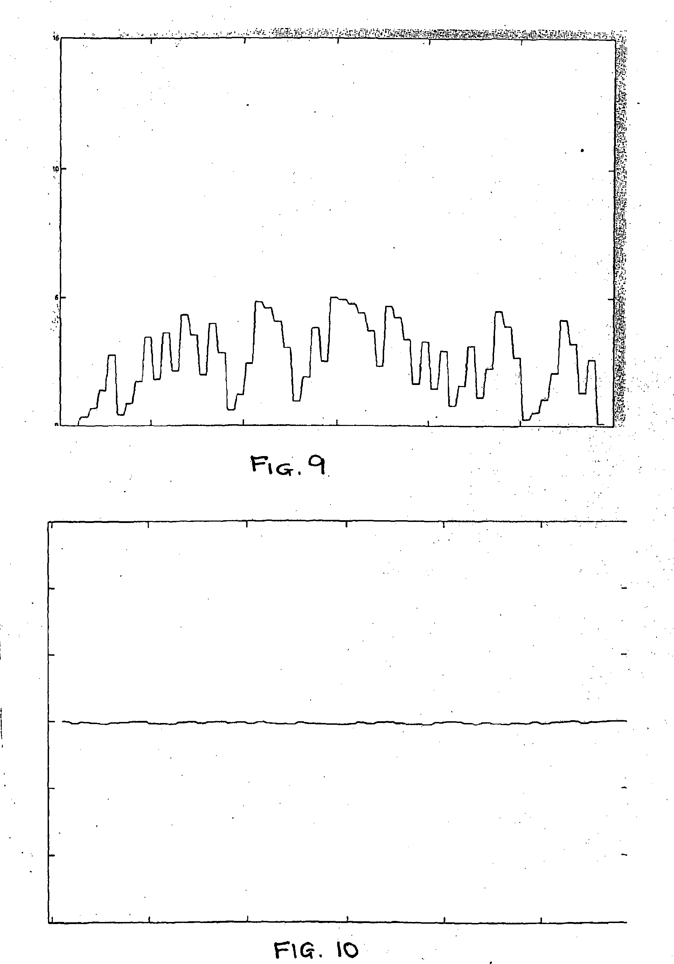

Figure 5 is a cross-section through a portion of a blade according to a further preferred embodiment of the present invention showing exemplary variations in the blade surface. Figure 6 is a perspective view from above of a portion of the blade surface of Figure 5 showing exemplary variations in the blade surface. Figure 7 is a cross-section through a portion of a blade according to a further preferred embodiment in which variations are embedded in the blade and Figure 8 shows an blade according to a further preferred embodiment in which the surface variations are arranged in bands across the surface of the blade. Figures 9 and 10 show cross-sections through the surfaces of blades according to further preferred embodiments of the present invention.

As shown in Figures 5 and 6, a methodology and construction is proposed to scatter incident electromagnetic radiation. A typical radar installation operates in monostatic mode in which the transmitter and detector are colocated. One way to reduce the RCS of a windturbine blade 100 is to reduce the backscatter in the direction of the transmitter. This may be achieved in the embodiments shown in Figures 5 to 10 through modifiction of the phase of the radiation reflected from the blade surface by creating variations in or on the surface, such as wells 102 having depths or heights of, for example, a fraction of a wavelength. These variations are preferably termed wells but may extend into the surface of the blade 100 or be applied to the surface such that the wells 102 extend from the surface with the top of the wells 102 being spaced from the surface of the blade. As shown in Figures 5 to 7, a plurlaity of wells 102 are applied to or created in the surface of the blade 100, the wells 102 being of differing heights/depths and adjacent to a plurality of other wells to form an array of wells.

Preferably, the wells 102 have sloped sides 104 to reduce further the reflections due to potential corner cube effects.

As shown in Figure 7, these wells 102 may be applied to an internal structure of the blade 100, preferably in addition to the external surface of the blade 100, to reduce further the clutter effect of reflections from the blade.

The principle of the effects of applying the wells 102 to the blade 100 may be explained with reference to a flat plate in two dimensions, as similar principles will apply to the curved surface of a windturbine blade. The following explanation uses approximate methods but computer simulation may be used to make adjustments as necessary without changes in the underlying the principles.

For a flat plate at right angles to a radar transmitter, the reflectance is maximal in the direction of the transmitter. The far field scattering of electromagnetic radiation may be determined from the Fourier Transform of the surface of the plate. This gives a scalar approximation to the scattering problem. The Fraunhofer approximation of the scattering is given as:

$$|s(\theta,\varphi)| = |A[\cos(\theta) + 1] \int R(x) e^{jkx[\sin(\theta) + \sin(\varphi)]} dx$$

where s is the scattered field, R(x) is the reflectance factor of the surface and $\theta$ the angle of reflectance, $\varphi$ the angle of incidence and k the wavenumber.

The surface reflectance may be modified by modifying the surface complex reflectance R(x). It is possible to further approximate by setting

$$\cos(\theta) + 1 \approx 1$$

and hence

$$|s(\theta,\varphi)| = |A \int R(x) e^{jkx[\sin(\theta) + \sin(\varphi)]} dx$$

which can be interpreted as a Fourier transform in variable kx.

In order to reduce scatter in the direction of the transmitter, the complex surface reflectance R(x) may be modified so as to create a null in the direction of incident radiation.

The surface reflectances may be created using primitive root sequences as follows. The numeric sequence may be written as $s_n$ -r" mod P for n=1,2, P-1 with P an odd prime, r a primitive root of P is a primitive root sequence. Using the primitive roots to create the surface reflectance may reduce specular direction reflectance compared to a planar surface and adding a zero to the sequence (which has the effect of spacing the reflection factors evenly around the unit circle for multiples of the design frequency) leads to an exact null in the specular direction.

The reflection from a flat plate may be reduced by creating wells 102 of depth $d_n$ where

$$d_n = \frac{s_n \lambda}{2(P-1)}$$

This creates nulls at integer multiples of the design frequency used to determine suitable depths of the wells 102.

For radar systems, as the most important frequencies are 3 GHz and 9 GHz and 9 GHz is an exact integer multiple of 3 GHz, nulls may be created at these integer multiples of the design frequency. The 5 GHz frequency radar systems will not have an exact null if 3 GHz is chosen as a design frequency, however, a beneficial effect will still be achieved using 3 GHz as the design frequency.

The largest well 102 preferably has a depth of approximately half a wavelength. For designs at 3 GHz this will be approximately 5 cm.

If a smooth surface finish is required for the blade 100, the wells 102 may be filled with a microwave transparent material (or approximation thereof) such as teflon (TM).

The above demonstrates that modifying the surface reflectance can create nulls in the specular direction which is of greatest concern in the monostatic radar problem. Therefore, applying the foregoing to windturbine blades, the front surface of a windturbine blade may be conceived as curved in one dimension and flat in the other. The RCS may be reduced by creating a null in either direction. For a blade which is vertical and frontally facing the radar transmitter, one reason for the large RCS is the flatness of the blade in the vertical direction which leads to an additive set of reflected wavefronts. The blade acts rather like a thin flat plate. If a null is added in the vertical direction, that is, along the face of the blade, much of the radiation will be scattered into lobes which are off-axis and hence non-specular. Consequently the RCS will fall. This may be achieved by the addition of the wells 102 to the blade surface, as shown in Figures 5 to 10.

In practice the front of the blade is curved (not flat) which is equivalent to the addition of a phase shift along the blade. The well depths may be computed taking into account the extra phase caused by blade curvature so as to maintain a null in the face-on position. In a preferred embodiment this may be performed by computer optimization taking into account the exact shape of the blade.

It is possible to use a two dimension tiling of the wells in order to increase scatter in both vertical and horizontal directions.

As mentioned above, to avoid creating corner cube reflections when creating the wells 102, the walls of the wells may be sloped. Ray tracing studies suggest that angles of 60 degrees or more between the sides of the well and the base of the well avoid this problem and produce a single reflected ray. In order to avoid adding these reflected rays, it is preferred that the walls of each well have a different slope angle.

Well depths for use with radar systems operating frequency in the 3 GHz range and 5 GHz range are preferably less than 5 cm and for the 9 GHz range they are preferably less than 1.7 cm deep.

Each well is shaped as a shallow depression with sloped edges and having a well depth determined by the formulae above.

In a preferred embodiment, as shown in Figure 8, the wells are applied as bands 120 around the blade 100. Most airflow over the blade 100 will be only marginally changed by the introduction of bands 120 as the flow is in the direction of the bands. However it is possible to remove the effect of the presence of the bands from the airflow by filling the bands 120 with a material which is nearly transparent to microwaves, such as teflon. In this way the external shape of a blade will be unaltered and the blade will retain its aerodynamic properties. The width of each band is preferably equal to the design wavelength which will typically be 10 cm for use with a 3 GHz radar system.

Figure 9 shows exemplary cross-sections through a blade surface which may be used for 3 GHz radar nulling using the prime number 59 to generate the well depths. The heights shown in Figure 9 are in cm.

As shown in Figure 9, the well depth:width ratio has been altered in order to show the full period on the diagram (the widths of the wells 102 have been reduced in scale relative to the well depths).

Figure 10 shows exemplary surface undulations which represent the cross-section through the bands of Figure 8 around a blade 100.

Thus, the preferred embodiments shown in Figures 5 to 10 illustrate a methodology for scattering microwave energy which provide a blade having little change in blade weight from conventional blades and lower production costs than blades to which current stealth technology has been applied. Furthermore these proposed preferred embdoiments may be used either independently from or in conjunction with existing stealth technology proposals to assist in creating a radar null by changing the phase of the reflected microwaves in such a way as to create destructive interference in the direction of the transmitter. A further advantage is that such effects may be achieved at multiples of a design frequency so that a single design can cover all important civil and military radar requirements.

As an alternative to the wells and bands of Figures 5 to 10, according to a further preferred embodiment, a phase screen which is a layer of dielectric material that introduces changes in the phase of the incident wavefield may be applied to the surfaces of the blades.

In wet conditions caused, for example, by rain or seaspray, the turbine blades may become more reflective to microwaves. This would make a solution based solely on coventional "stealth" technology less viable. One or more preferred embodiments of the present invention provide a solution will still be applicable in wet conditions.

Furthermore, one or more embodiments of the present invention allow the use of currently available techniques for blade construction to be used which is more cost effective than producing blades to which "stealth" technology is to be applied.

Various modifications to the embodiments of the present invention described above may be made. For example, other components and method steps may be added or substituted for those described above. An example of such a modification is that whilst it is preferred that each of the blades 2, 20 rotate in the same direction, one or more pairs of blades may be arranged to rotate in the opposite direction to the other one or more pairs to reduce the effect of secondary reflections, as described above. Also, in a further preferred embodiment, the wells described above may be applied to and extend along the side edges of the blades to scatter the reflected radiation therefrom. Furthermore, variations in the surfaces of the nacelle and/or the tower may also be applied to scatter reflected radiation. In such cases, the surfaces of the nacelle and/or tower may be stamped with a pattern or a pattern applied as a layer to or around the surfaces to achieve variations in scattering of the reflected radiation. Thus, although the invention has been described using particular preferred embodiments, many variations are possible, as will be clear to the skilled reader, without departing from the invention.

**Claims**

1. A blade for a wind turbine (1, 10) comprising:

   a first end (5, 50) and a second end (6, 60), the first end (5, 50) being a free end and the second end (6, 60) being attachable in use to a shaft (4, 40) of a wind turbine (1, 10);
   a first surface (9, 90) and a second surface; the first surface (9, 90) joining the second surface along a first side edge (7, 70) and a second side edge (8, 80);
   the first (9, 90) and second surfaces defining an airfoil section;
   the blade (2, 20, 100) further comprising a layer applied to and/or incorporated in and/or within the blade (2, 20, 100), the layer being arranged to create a plurality of phase changes in radiation incident upon the blade (2, 20, 100) such that radiation reflected from the blade (2, 20, 100) is scattered in a plurality of directions to create destructive interference with the radiation incident upon the blade (2, 20, 100) in the direction of the source of the incident radiation, wherin said layer is:

   a layer comprising an array of wells (102) applied to one or more of the first surface (9, 90) or the second surface and/or to an inner surface within the blade (2, 20, 100), and comprising a plurality of wells having different depths.

2. A blade according to claim 1, wherein the layer comprises a layer of material applied to the outer surface of the blade.

3. A blade according to claim 1 or 2 wherein the layer comprises a layer of material incorporated within the blade.

4. A blade according to claim 1, 2, or 3, wherein the array of wells (102) comprises a plurality of wells (102) having sloping internal and/or external walls.

5. A blade according to any one of claims 1 to 4, the array of wells (102) extends along one or more of the first (7, 70) and second (8, 80) side edges of the blade (2, 20, 100).

6. A blade according to any one preceding claim, the layer comprising a plurality of arrays of wells (102) arranged in one or more bands extending across the blade (2, 20, 100).

7. A blade according to any one preceding claim, wherein the wells (102) are filled with a material to provide a substantially smooth surface across the blade.

8. A blade according to claim 7, wherein the material comprises a material substantially transparent to microwaves, for example Teflon (TM).

9. A blade according to any one of the preceding claims, wherein the array of wells (102) comprises a plurality of wells (102) each having an associated depth, the depth of each well (102) being determined according to the formula:

$$d_n = \frac{s_n \lambda}{2(P-1)},$$

where

$d_n$ is the depth of a well (102),
n is the number of a well (102) where n=1, 2...P-1 with P being an odd prime,
r is a primitive root of P,
A is the wavelength of the incident radiation,
$s_n$ is a primitive root sequence defined *by* $s_n = r^n$ mod P.

**10.** A blade according to any one of the preceding claims, wherein the incident radiation has a wavelength and the array of wells (102) comprises a plurality of wells (102) each having an associated depth, wherein the maximum depth of a well (102) is substantially half the wavelength of the incident radiation.

**11.** A blade according to claim 10, wherein the depth of a well (102) is less than or equal to 5cm and preferably less than or equal to 1.7 cm.

**12.** A wind turbine comprising a plurality of blades (2, 20, 100) according to any one of the preceding claims.

**Patentansprüche**

**1.** Schaufel für eine Windturbine (1, 10), die aufweist:

ein erstes Ende (5, 50) und ein zweites Ende (6, 60), wobei das erste Ende (5, 50) ein freies Ende ist, und wobei das zweite Ende (6, 60) bei Benutzung an einer Welle (4, 40) einer Windturbine (1, 10) befestigt werden kann;
eine erste Fläche (9, 90) und eine zweite Fläche; wobei sich die erste Fläche (9, 90) mit der zweiten Fläche längs eines ersten Seitenrandes (7, 70) und eines zweiten Seitenrandes (8, 80) verbindet;
wobei die erste (9, 90) und die zweite Fläche einen Profilquerschnitt definieren;
wobei die Schaufel (2, 20, 100) außerdem eine Schicht aufweist, die auf die Schaufel (2, 20, 100) aufgebracht und/oder in sie eingebaut wird, wobei die Schicht angeordnet wird, um eine Vielzahl von Phasenveränderungen bei der Strahlung hervorzurufen, die auf die Schaufel (2, 20, 100) auftrifft, so dass die von der Schaufel (2, 20, 100) reflektierte Strahlung in einer Vielzahl von Richtungen zerstreut wird, um ein Auslöschen der Strahlung zu bewirken, die auf die Schaufel (2, 20, 100) in der Richtung der Quelle der auftreffenden Strahlung auftrifft, wobei die Schicht
eine Schicht ist, die eine Anordnung von Vertiefungen (102) aufweist, die bei einer oder mehreren der ersten Fläche (9, 90) oder der zweiten Fläche und/oder einer inneren Fläche innerhalb der Schaufel (2, 20, 100) zur Anwendung kommt, und die eine Vielzahl von Vertiefungen mit unterschiedlichen Tiefen aufweist.

**2.** Schaufel nach Anspruch 1, bei der die Schicht eine Schicht aus einem Material aufweist, das auf die äußere Fläche der Schaufel aufgebracht wird.

**3.** Schaufel nach Anspruch 1 oder 2, bei der die Schicht eine Schicht aus einem Material aufweist, das in die Schaufel eingebaut wird.

**4.** Schaufel nach Anspruch 1, 2 oder 3, bei der die Anordnung der Vertiefungen (102) eine Vielzahl von Vertiefungen (102) aufweist, die sich neigende innere und/oder äußere Wände aufweisen.

**5.** Schaufel nach einem der Ansprüche 1 bis 4, bei der sich die Anordnung der Vertiefungen (102) längs eines oder mehrerer des ersten (7, 70) und des zweiten Seitenrandes (8, 80) der Schaufel (2, 20, 100) erstreckt.

**6.** Schaufel nach einem der vorhergehenden Ansprüche, bei der die Schicht eine Vielzahl von Anordnungen von Vertiefungen (102) aufweist, die in einem oder mehreren Bändern angeordnet sind, das sich über die Schaufel (2, 20, 100) erstreckt.

**7.** Schaufel nach einem der vorhergehenden Ansprüche, bei der die Vertiefungen (102) mit einem Material gefüllt sind, um eine im Wesentlichen glatte Oberfläche über die Schaufel zu bewirken.

**8.** Schaufel nach Anspruch 7, bei der das Material ein Material aufweist, das im Wesentlichen für Mikrowellen durchlässig ist, beispielsweise Teflon$^{(™)}$.

**9.** Schaufel nach einem der vorhergehenden Ansprüche, bei der die Anordnung der Vertiefungen (102) eine Vielzahl von Vertiefungen (102) aufweist, die jeweils eine dazugehörende Tiefe aufweisen, wobei die Tiefe einer jeden Vertiefung (102) entsprechend der folgenden Formel ermittelt wird:

$$d_n = \frac{s_n \lambda}{2(P-1)},$$

worin sind:

$d_n$ die Tiefe einer Vertiefung (102);
n die Anzahl der Vertiefungen (102), worin n = 1, 2... P-1, wobei P eine ungerade Primzahl ist;
r eine einfache Wurzel von P;
λ die Wellenlänge der auftreffenden Strahlung;
$s_n$ eine einfache Wurzelfolge, die durch $s_n = r^n$ mod P definiert wird.

**10.** Schaufel nach einem der vorhergehenden Ansprüche, bei der die auftreffende Strahlung eine Wellenlänge aufweist und die Anordnung der Vertiefungen (102) eine Vielzahl von Vertiefungen (102) aufweist, von denen eine jede eine dazugehörige Tiefe aufweist, wobei die maximale Tiefe einer Vertiefung (102) im Wesentlichen die halbe Wellenlänge der auftreffenden Strahlung beträgt.

**11.** Schaufel nach Anspruch 10, bei der die Tiefe einer Vertiefung (102) kleiner als oder gleich 5 cm ist und vorzugsweise kleiner als oder gleich 1,7 cm ist.

**12.** Windturbine, die eine Vielzahl von Schaufeln (2, 20, 100) nach einem der vorhergehenden Ansprüche aufweist.

**Revendications**

**1.** Pale pour une éolienne (1, 10) comprenant :

une première extrémité (5, 50) et une seconde extrémité (6, 60), la première extrémité (5, 50) étant une extrémité libre et la seconde extrémité (6, 60) pouvant être reliée, à l'usage, à un arbre (4, 40) d'une éolienne (1, 10) ;
une première surface (9, 90) et une seconde surface ; la première surface (9, 90) rejoignant la seconde surface le long d'un premier bord latéral (7, 70) et d'un second bord latéral (8, 80) ;
les première (9, 90) et seconde surfaces définissant une section de profil aérodynamique ;
la pale (2, 20, 100) comprenant en outre une couche appliquée sur la pale (2, 20, 100) et/ou incorporée à celle-ci et/ou dans celle-ci, la couche étant agencée pour créer une pluralité de changements de phases concernant le rayonnement qui est incident sur la pale (2, 20, 100) de manière que le rayonnement réfléchi par la pale (2, 20, 100) soit dispersé dans une pluralité de directions pour créer des interférences destructrices vis-à-vis du rayonnement qui est incident sur la pale (2, 20, 100) dans la direction de la source du rayonnement incident, dans laquelle ladite couche est :

une couche comprenant un ensemble de puits (102), appliquée sur une ou plusieurs surfaces parmi la première surface (9, 90) ou la seconde surface et/ou sur une surface intérieure dans la pale (2, 20, 100), et comprenant une pluralité de puits de diverses profondeurs.

**2.** Pale selon la revendication 1, dans laquelle la couche comprend une couche de matière appliquée sur la surface extérieure de la pale.

**3.** Pale selon la revendication 1 ou 2, dans laquelle la couche comprend une couche de matière appliquée à l'intérieur de la pale.

**4.** Pale selon la revendication 1, 2 ou 3, dans laquelle l'ensemble de puits (102) comprend une pluralité de puits (102) présentant des parois internes et/ou externes pentues.

**5.** Pale selon l'une quelconque des revendications 1 à 4, dans laquelle l'ensemble de puits (102) s'étend le long d'un ou plusieurs bords parmi les premier (7, 70) et second (8, 80) bords latéraux de la pale (2, 20, 100).

**6.** Pale selon l'une quelconque des revendications précédentes, la couche comprenant une pluralité d'ensembles de puits (102) agencés dans une ou plusieurs bandes qui s'étendent sur la pale (2, 20, 100).

**7.** Pale selon l'une quelconque des revendications précédentes, dans laquelle les puits (102) sont remplis d'une matière assurant une surface essentiellement lisse sur la pale.

**8.** Pale selon la revendication 7, dans laquelle la matière comprend une matière essentiellement transparente aux micro-ondes, par exemple le Téflon (TM).

**9.** Pale selon l'une quelconque des revendications précédentes, dans laquelle l'ensemble de puits (102) comprend une pluralité de puits (102) présentant chacun une profondeur associée, la profondeur de chaque puits (102) étant déterminée conformément à la formule :

$$d_n = \frac{s_n \lambda}{2(P-1)},$$

dans laquelle $d_n$ désigne la profondeur d'un puits (102),

n désigne le numéro d'un puits (102) où n = 1, 2...P-1 en sachant que P est un nombre premier impair,
r désigne une racine primitive de P,
$\lambda$ désigne la longueur d'onde du rayonnement incident,
$s_n$ désigne une suite de racines primitives définie par $s_n = r^n \bmod P$.

**10.** Pale selon l'une quelconque des revendications précédentes, dans laquelle le rayonnement incident présente une longueur d'onde et l'ensemble de puits (102) comprend une pluralité de puits (102) présentant chacun une profondeur associée, la profondeur maximale d'un puits (102) faisant essentiellement la moitié de la longueur d'onde du rayonnement incident.

**11.** Pale selon la revendication 10, dans laquelle la profondeur d'un puits (102) est inférieure ou égale à 5 cm et de préférence inférieure ou égale à 1,7 cm.

**12.** Éolienne comprenant une pluralité de pales (2, 20, 100) selon l'une quelconque des revendications précédentes.

VV Pole, L-Band, FFT SIZE = 2048 Effective PRF = 60.9755 (mHz)

Time (s) FS6125V tar, wm12 site GE azimuth = 100

Fig.1(a)

HH Pole, L-Band, FFT SIZE = 2048 Effective PRF = 60.9755 (mHz)

Time (s) FS6125H tar, wm12 site GE azimuth = 100

Fig.1(b)

FIG.2a

FIG.2b

FIG. 2c

| WIND TURBINE | → REFLECTED RADAR SIGNAL(S) → | GENERATION OF DOPPLER SHIFT SIGNAL | → | SUMMING OF POSITIVE & NEGATIVE PULSES/ SPIKES | → REDUCED CLUTTER SIGNAL → |

1,10

EP 2 288 809 B1

FIG. 3(a)

FIG. 3(b)

## FIG. 4(a)  Cl(alpha):

AIRFOIL
OF FIG. 3(b)

AIRFOIL alpha
OF FIG. 3(a)

## FIG. 4(b)  Cd(alpha):

AIRFOIL
OF FIG. 3(b)

AIRFOIL
OF FIG. 3(a)

alpha

18

100 — 102

FIG. 5

FIG. 6

102

FIG. 7

100

FIG. 8

100

120

120

FIG. 9

FIG. 10

**EP 2 288 809 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1746284 A